(19) **Europäisches Patentamt European Patent Office Office européen des brevets**

(11) **EP 3 793 062 B1**

(12) **EUROPEAN PATENT SPECIFICATION**

(45) Date of publication and mention of the grant of the patent:
**01.05.2024 Bulletin 2024/18**

(21) Application number: **19196965.8**

(22) Date of filing: **12.09.2019**

(51) International Patent Classification (IPC):
*H02K 1/02* ^(2006.01)   *H02K 1/14* ^(2006.01)
*H02K 21/24* ^(2006.01)   *H01F 3/02* ^(2006.01)
*H02K 16/02* ^(2006.01)

(52) Cooperative Patent Classification (CPC):
**H02K 1/02; H02K 1/14; H02K 21/24;** H02K 16/02;
H02K 2213/03

(54) **AXIAL FLUX ELECTRIC MOTOR**

AXIALFLUSSELEKTROMOTOR

MOTEUR ÉLECTRIQUE À FLUX AXIAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**17.03.2021 Bulletin 2021/11**

(73) Proprietors:
• **ThyssenKrupp Electrical Steel GmbH 45881 Gelsenkirchen (DE)**
• **Magnax BVBA 8500 Kortrijk (BE)**

(72) Inventors:
• **Belgrand, Thierry 62232 Hinges (FR)**
• **Lemaître, Régis 83780 Flayosc (FR)**
• **Leijnen, Peter 9800 Bachte-Maria-Leerne (BE)**

(74) Representative: **Cohausz & Florack Patent- & Rechtsanwälte Partnerschaftsgesellschaft mbB Bleichstraße 14 40211 Düsseldorf (DE)**

(56) References cited:
**WO-A2-2010/146175     GB-A- 2 475 095 JP-A- 2011 066 978**

## Description

The invention relates to an axial flux electric motor comprising the features summarized in the preamble of claim 1.

An axial flux electric motor of this kind is known from JP 2011 066978 A. According to this publication sheet pieces are blanked and formed from an electromagnetic steel plate. The sheet pieces are stacked to form a laminate block which includes a rectangular lamination cross section. The laminate block is divided by a division surface obliquely crossing a steel plate surface to form a plurality of laminated core pieces. The plurality of the laminated core pieces are disposed so that their width in a circumferential direction on an outer peripheral side is larger than that on an inner peripheral side.

Other examples of motors of the type to which the invention relates are explained in detail in WO 2018/167214 A1, which also deals in detail with further prior art representing the technical background of the present invention.

An axial flux electric motor thus is a direct drive, which in contrast to the linear movements of linear motors produces a round movement by torque which results from the interacting of permanent magnets and electro magnets. In axial flux electric machines the stator is fixedly mounted and forms the electric active part. It comprises poles which in use act as electromagnets. The rotor, which rotates in use, is the electrically passive part and contains poles formed by permanent magnets, which interact with the electro magnets carried by the stator.

In axial flux electric motors of the type under consideration here, the electromagnetic fields and, accordingly, the magnetic fluxes flowing during use have a defined alignment axially parallel to the axis of rotation of the rotor of the motor. The alignment of the fields is determined by the longitudinal alignment of the cores of the poles of the stator, which defines a pole axis also arranged parallel to the axis of rotation of the rotor.

It is known, that the electrical loss occurring during operation of an axial flux electric motor can be minimized by using laminations for the cores of the poles which are cut from a grain-oriented electrical steel sheet material. Grain Oriented Electrical Steel sheets are characterized by an outstanding high crystal grain size in the range of some tenth of millimeters and a very sharp orientation of its grains in the preferred direction. In the skilled language this distinctly oriented texture of the structure of grain oriented electrical steel sheets is called "cube-on-edge orientation" or "Goss texture". The clear orientation of the grains of grain oriented electrical steel sheets leads to excellent magnetic properties and easy magnetization along the preferred direction of the grains of the sheets. This results in a low loss and high permeability in the preferred direction of the grains.

Grain-oriented electrical steel undergoes a number of production steps, including a hot and a cold rolling and various annealing steps. In this way, a steel strip is obtained whose grains, which in the skilled language are also named "crystallites", are not only particularly large but also oriented in such a way that the preferred direction of their orientation corresponds to the direction in which the grain-oriented electrical steel sheet or strip has been rolled during its hot and cold rolling. In practice, therefore, the preferred direction in which the grains of grain oriented electrical steel sheets are oriented coincides with the rolling direction of grain-oriented electrical steel.

Detailed explanations of the special properties of grain-oriented electrical steel and the steps involved in its production can be found in Merkblatt 401 "Elektroband und -blech", Ausgabe 2017, ISSN 0175-2006, published by Wirtschaftsvereinigung Stahl, Düsseldorf, Deutschland.

Thus, when the laminations of the cores of the poles of the stator are made from grain oriented electrical steel sheet, the magnetic flux between the electro magnets formed by the poles of the stator and the permanent magnet poles of the rotors which are respectively present opposite of the poles can be channeled in a particularly effective manner by aligning the laminations of the cores such that the preferred direction the grains of the laminations are oriented correspond to the pole axis of the respective stator pole.

The permanent magnets of the rotor of an axial flux electric machine produce an attraction force to all magnetic materials. Since the cores of the poles of the stator are made of magnetic material this results in a tendency of the rotor to align itself automatically according to the arrangement of the permanent magnets it carries in relation to the fixed position of the cores of the poles in such a way that the magnetic forces acting between the cores of the poles of the stator and the permanent magnets of the rotor are optimally effective. In the skilled language this effect is referred to as "Cogging torque", which thus is a cyclic torque in an unenergized permanent magnet motor resulting from the tendency of the rotor and stator to align themselves in a position of minimized magnetic reluctance.

Cogging causes the rotor of an axial flux electric motor to run unevenly because the motor has to apply an increased torque for short periods to overcome the rotational positions in which the magnetic attraction forces between the cores of the poles of the stator and the permanent magnets of the rotor are maximally effective. Cogging, therefore, is an undesired effect that contributes to the machines output ripple, vibration and noise. The cogging torque effect can arise also in the cases of machines like reluctance or induction ones, related to the ratio between stator and rotor poles teeth.

Against this background, the object has arisen to develop an axial flux electric motor which guarantees smooth running and an optimized electric efficiency with simple means.

The invention solved this problem by means of an axial flux motor with at least the characteristics specified in claim 1.

The general idea and advantageous embodiments of the invention are indicated in the dependent claims and explained in detail below.

In accordance with the prior art explained above, an axial flux electric motor according to the invention thus comprises a rotor rotatably supported around an axis of rotation and carrying a number RPN of magnetic poles, and a stator carrying a number SPN of poles distributed at regular angular intervals about the axis of rotation of the rotor, each of the poles of the stator comprising a core extending in a radial direction of the stator and a winding of an electric conductor wound around the core, the cores of the poles each being formed by a stack of laminations consisting of a grain-oriented electrical steel sheet, the grains of which are oriented in a preferred direction, the cores respectively being aligned along a pole axis of the respective pole which is oriented axially parallel to the axis of rotation of the rotor.

According to the invention, seen in a plan view on the head face of the core of at least one of the poles, at least for one of the laminations forming this core the direction of the pole axis includes with the preferred direction of the grains of said lamination a tilt angle â which is greater than 0° and at most equal to 30°.

If it is said here that the preferred direction in which the grains of the laminations forming the cores of the poles of the stator are oriented includes a tilt angle â with the direction of the pole axis of the respective pole, this statement refers to a view directed at the head surface of the core of the respective pole, i.e. a view in which the respective pole axis and the respective preferred direction are projected into that plane in which the head surface of the respective pole is located, the head surface of the respective core being formed by the surface of the exposed side of the lamination, which lies on top of the stack of laminations forming the respective core. The same applies if it is said here that the preferred direction in which the grains of the laminations forming the cores of the poles of the stator are oriented deviates from the direction of the pole axis of the respective pole in a certain direction, e.g. the circumferential direction of the stator as such or the circumferential movement of the rotor in relation to the stator.

As in the prior art in an axial flux motor according to the invention the laminations of the stacks, which form the cores of the poles of the stator, are made of grain-oriented electrical steel. However, in a motor according to the invention the laminations are not cut from the respective electrical sheet in such a way that, when stacked to the respective tooth of a pole of the stator, the preferred direction in which their grains are oriented corresponds as perfectly as possible to the orientation of the respective pole axis. Rather, according to the invention the laminations are cut from a grain oriented electrical steel sheet such that the preferred direction of the grains of at least one of the laminations is tilted from the alignment of the pole axis of the respective pole, so that an angle â is included between the orientation of the pole axis and the preferred direction in which the grains of the sheet metal in question are oriented if seen in a plan view of the head surface of the respective core.

The deviation of the preferred direction, in which the grains of the respective lamination are aligned, from the alignment of the pole axis by the angle â according to the invention, result in the following effects:

- Introducing a tilt angle in the laminations consisting of grain oriented steel sheet causes an electromagnetic effect that is similar to the effect of adding pole shoes to a magnetic core, by lowering the magnetic reluctance between the core and a magnet that is near the edge of the core, but that is not yet aligned with the core. Therefore, the machine according to the invention has considerably less cogging torque.

- As is the case with pole shoes, where the flux density inside the stator core is increased because the pole shoe surface is larger than the sectional surface of the core, the tilt angle also creates a flux concentrating effect by allowing the magnetic flux to enter the core at a wider angle. Therefore, the machine according to the invention has a higher torque density.

- Because the magnetic poles of the rotor see a more continuous flux path through the stator, the negative effect of the slots will become less. Because there is less 'slotting effect' on the flux distribution, the spatial harmonics, which are the main cause of eddy currents in the magnets and the rotor, will become less. Therefore, a machine according to the invention is more efficient.

- The permeance fluctuations are reduced due to the virtual skewing brought by the tilting between laminations. Therefore, the radial magnetic forces are lowered and so are the vibration and noise levels of an axial flux motor designed in accordance with the invention are lower as well.

Preferably at least 60 % of the laminations forming a core of one pole of the stator have a preferred direction of their grains which deviates from the pole axis of the respective pole. For example at least two third of the laminations may show this feature if the axial flux electric motor according to the invention can be driven in a forward and a reverse direction as explained hereinafter. It may contribute, however, to the minimizing of the cogging effect if at least 70 % or at least 80 %, in particular at least 90 % or each of the laminations stacked to form a core of a pole of the stator have a preferred direction of their grains which deviates from the pole axis of the associated pole in the manner according to the invention. The latter embodiment turns out to be especially advantageous, if the motor has only one direction of rotation.

According to the invention, the amount of the tilt angle â by which the preferred direction of the grains of the plates forming the cores of the poles deviates from the orientation of the pole axis is more than 0° but not more than 30° (i.e. $0° < |â| \leq 30°$). Thus, if seen in a plan view on the top surface of the core of respective pole,

- the preferred direction of the grains of the respective lamination deviates from the orientation of the pole axis by a tilt angle â of -30° to <0° if the preferred direction of the grains of the lamination deviates against the direction of rotation of the rotor from the orientation of the pole axis, or

- the preferred direction of the grains of the respective lamination deviates from the orientation of the pole axis by a tilt angle â of >0° to +30°, if the preferred direction of the grains of the lamination deviates in the direction of rotation of the rotor from the orientation of the pole axis.

Tilt angles â of at least 1° according to its absolute value (i.e. $|â| > 1°$), preferably of at least 5° according to its absolute value (i.e. $|â| > 5°$), prove to be particularly useful. Optimum effects of the deviation of the preferred direction of the grains of the sheet from the orientation of the pole axis as provided by the invention thus result from tilt angles â which absolute value amounts to 5° to 30° ($5° \leq |â| \leq 30°$).

If the number SPN of the poles of the stator is greater than the number RPN of the magnetic poles of the rotor it is possible to estimate an optimum tilt angle â by the following condition:

$$180° / SPN \leq â \leq 180° / RPN.$$

If, however, the number SPN of the poles of the stator is smaller than the number RPN of the magnetic poles of the rotor, which means RPN > SPN, than it is possible to estimate an optimum tilt angle â by the following condition:

$$180° / RPN \leq â \leq 180° / SPN.$$

The direction in which the preferred direction of the grains of the respective lamination deviates from the direction of the pole axis depends on the direction of the rotational movement of the rotor of the axial flux electric motor according to the invention.

The tilt angle â, in which the preferred direction of the grains of the laminations of the core of one pole are oriented, deviates from the pole axis of said pole must not be equal for all laminations. Instead, the deviation angel can vary from lamination to lamination, so that a sharply concentrated orientation of the electromagnetic field is avoid, which is produced by the respective pole in use. For that purpose, if seen in a plan view on the head face of the core of the respective pole, in at least one of the poles of the stator the preferred direction of the grains of at least one lamination of its core can include with the orientation of its pole axis a tilt angle â which is different from the tilt angle â included by the preferred direction of the grains of another lamination of the same core with the orientation of the pole axis of the respective pole. In this way this embodiment of the invention contributes to a minimization of the cogging effect, since a pole, which core is formed by laminations with differing tilt angles â, produces in use an electromagnetic field, which slightly expands over the area the tilt angles â of the laminations of the core of the respective pole are spread.

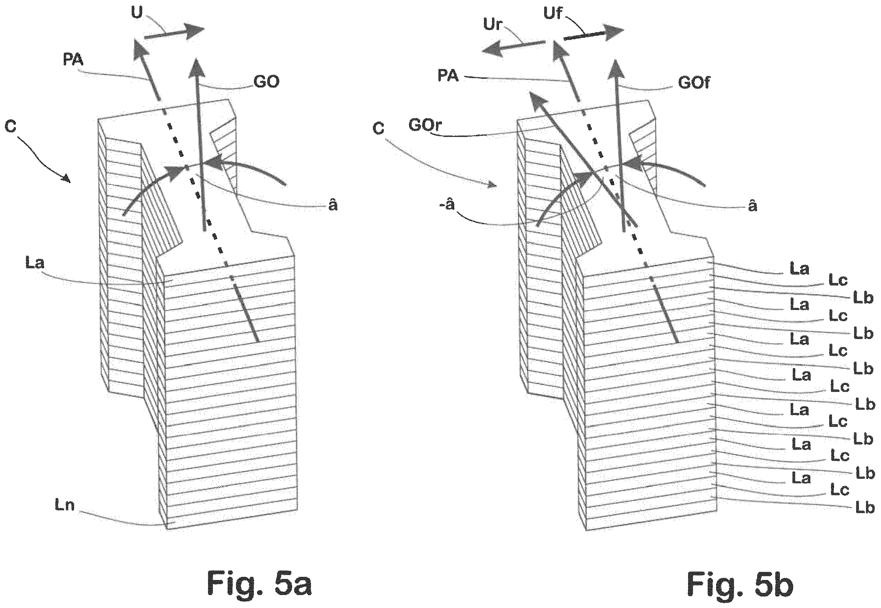

In case the rotor is rotatable only in one direction of rotation, then the preferred direction of the grains of the laminations of the core of at least one pole of the stator may deviate in the direction of rotation from the direction, in which the pole axis of the pole is aligned, if seen in a plan view on the head face of the core of the respective pole. This is demonstrated in Fig. 5a, in which arrow "GO" indicates the preferred orientation of the grains of the laminations "La ... Ln" of a core "C", the arrow "PA" indicates the direction of the pole axis of the respective pole and the arrow "U" indicates the direction of rotation of the rotor and "â" indicates the tilt angle enclosed between the direction PA of the pole axis and the preferred direction GO, in which the grains of the respective lamination are oriented. Since in this embodiment the preferred orientation of the grains of the sheet metal blanks of the core of the respective pole is tilted relative to the orientation of the pole axis in the direction of rotation of the rotor, the electromagnetic field generated by the respective pole during operation is not only highly concentrated in the direction of the pole axis but also effective in a direction offset in the direction of rotation of the rotor. In this way, the electromagnetic forces acting during operation assist the rotor to overcome the position of greatest magnetic attraction between the core of each pole and the permanent magnets carried by the rotor.

In an axial flux electric motor according to the invention the rotor is movable in a forward and a reverse direction, wherein in at least one pole in at least one of the laminations forming the core of said pole the preferred direction, in which the grains of said lamination are oriented, deviates in the forward direction from the orientation of the pole axis, while in another lamination of the same core the preferred direction in which the grains of this lamination are oriented, deviates in the reverse direction from the orientation of the pole axis. This is demonstrated in Fig. 5b, in which the arrow "GOf" indicates the preferred orientation of the grains of a first lamination "La" of a core "C", the arrow "PA" indicates the direction of the pole axis of the respective pole, the arrow "Uf" indicates the forward direction of rotation of the rotor and "â" indicates the tilt angle enclosed between the direction PA of the pole axis and the preferred direction GOf, the arrow "GOr" indicates the preferred orientation of the grains of a second lamination "Lb" arranged in the vicinity the first lamination La, the arrow "Ur" indicates the reverse direction of rotation of the rotor and "-â" indicates the tilt angle enclosed between the direction PA of the pole axis and the preferred direction GOr, in which the grains of the second lamination are oriented. Preferably, laminations La with a tilt angle â and laminations Lb with tilt angle -â can be stacked in alternating order to form the core C. In this way an optimally balanced support of the rotor is achieved in overcoming the magnetic attraction forces acting between the core of the respective pole and the permanent magnets of the rotor during operation. This effect is further supported in that between the laminations, which preferred directions, in which the grains of the respective lamination are oriented, deviate in opposite directions from the direction of the pole axis of the respective pole, an additional lamination is arranged, wherein the preferred direction, in which the grains of the additional lamination are oriented, corresponds to the direction of the pole axis of the respective pole. In Fig. 5b the additional laminations arranged between the laminations La with the deviation â and the laminations Lb with the deviation -â are indicated by "Lc". With regard to the uniformity with which the rotor is supported in overcoming the magnetic forces acting between its permanent magnets and the core of the respective pole, it may also be useful if the amounts of the tilt angles â which are respectively enclosed between the preferred directions, in which the grains of the laminations are respectively oriented, and the direction of pole axis are equal ($|â| = |-â|$).

As an alternative to an alternating sequence of the tilting angles â of the laminations of a core of a pole, in an axial flux electric motor that is moved forward and backward in use, according to the invention cogging can also be especially efficiently reduced if in a first pole of the stator the preferred direction, the grains of the laminations of the core of this first pole are oriented, differs in a circumferential direction from the orientation of the pole axis of said pole, while in a second pole of the stator the preferred direction, in which the grains of the laminations of the core of the second pole are oriented, differs in the opposite circumferential direction from the orientation of the pole axis of said other pole.

Grain-oriented electrical sheets that are suitable for the purposes of the invention can be found in the brochure "Grain oriented electrical steel powercore - Product range", published by thyssenkrupp Electrical Steel GmbH, Kurt-Schumacher-Str. 95, 45881 Gelsenkirchen, Germany, issue 05/2019, that is available for download at the URL: https://www.thyssenkrupp-steel.com/media/content_1/products/electroband/electrical steel_integration/thy ssenkrupp electrical steel_product_range.pdf.

In the following, the invention is explained by a drawing in which a preferred embodiment of the invention is shown. The Figures schematically show:

Fig. 1    an axial flux electric motor in a side view;

Fig. 2    a core of a pole of a stator of the axial flux electric motor shown in Fig. 1 in a perspective view;

Fig. 3a - 3c    grain oriented electrical steel sheets during cutting laminations for forming the core shown in Fig. 2 in a plan view on one of their flat surfaces;

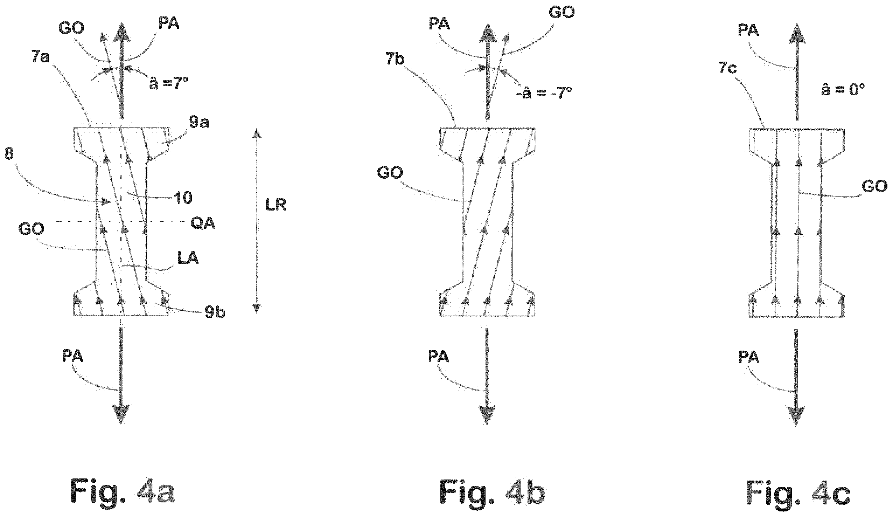

Fig. 4a - 4c    laminations cut from the oriented electrical steel sheets shown in Fig. 3a - 3c in a plan view on one of their flat surfaces;

Fig. 5a,5b    different possibilities of aligning the preferred orientation of the grains of the laminations forming the core shown in Fig. 2, depending on the direction of rotation of the rotor of a machine of the type shown in Fig. 1.

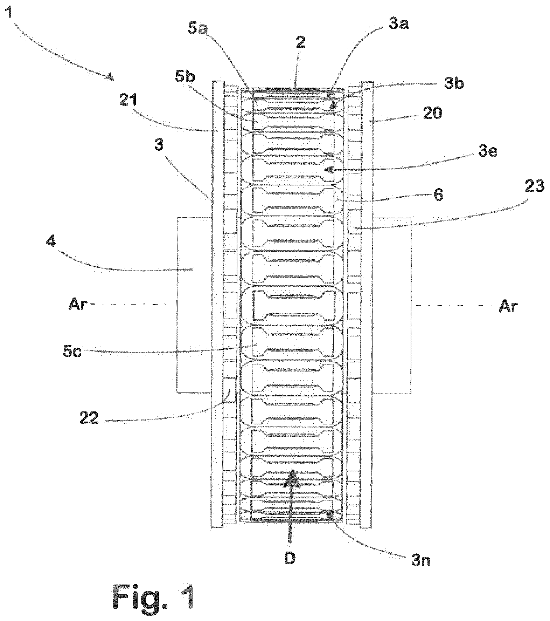

The axial flux electric motor 1 shown in Fig. 1 comprises a stator 2 and a rotor 3. It can rotate in a forward and in a reverse direction.

The stator 2 encloses an opening (not visible here) through which a shaft 4 of the rotor 3 is guided. The stator 2 also carries on its circumference a number of poles 3a ... 3n which are arranged at regular angular intervals distributed around the axis of rotation Ar of the rotor 3.

Each pole 3a ... 3n is formed by a core 5a,5b,5c carried by the stator 2 and a winding 6 which is formed by an electrical conductor wound around the respective core 5a,5b,5c in a conventional manner.

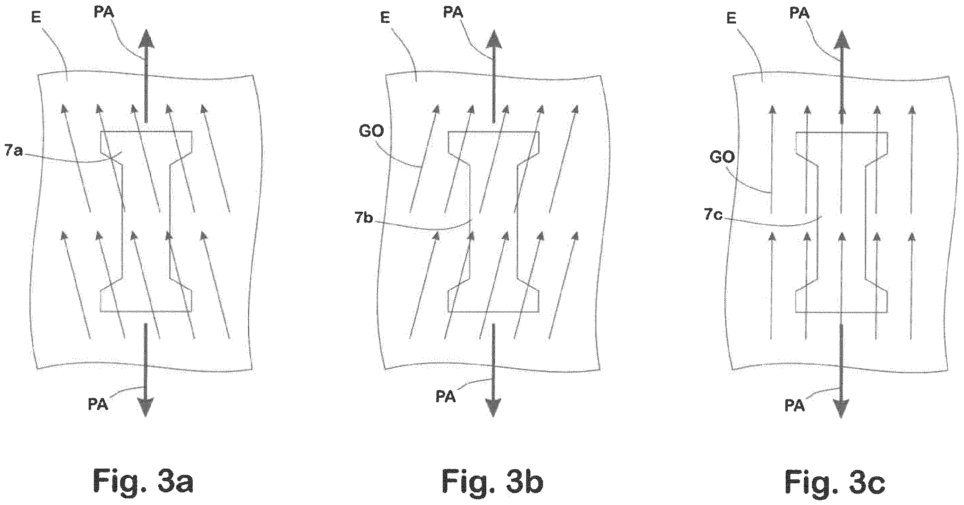

The cores 5a,5b,5c of the poles 3a ... 3n each are formed of a stack of a number of laminations 7a,7b,7c, which are stacked close to each other to form the respective core 5a - 5c. When viewed from above on one of their flat sides 8, the laminations 7a,7b,7c have an elongate shape (Fig. 3) which symmetrically aligned with respect to their longitudinal axis LA, which extends in the longitudinal direction LR of the laminations 7a,7b,7c and is centered with respect to the narrow sides of the laminations 7a,7b,7c, and with respect to their transverse axis QA as well, which, like the longitudinal axis LA, extends through the center of the laminations 7a,7b,7c.

In the embodiment shown here the laminations 7a,7b,7c each have an end section 9a,9b on their opposite sides in their longitudinal direction LR and a central portion 10 disposed between the end portions 9a,9b, which has a greater length, but is narrower than the end portions 9a,9b. It should be noted, however, that the shape of the laminations 7a,7b,7c is only an example. Any other shape is possible as long as it is symmetrical to the longitudinal axis LA and the transverse axis QA and has a clear orientation in longitudinal direction LR as well.

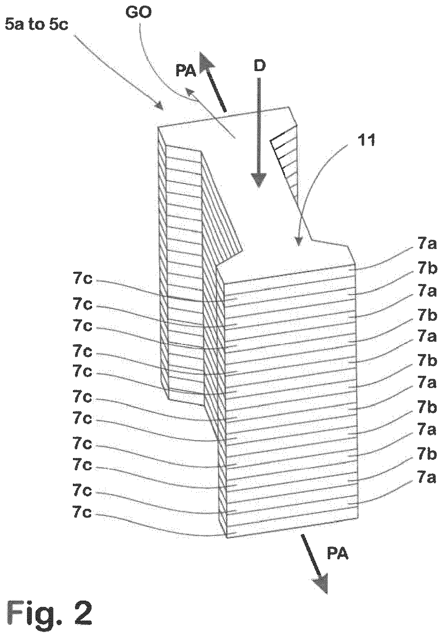

Corresponding to the shape of their laminates 7a,7b,7c, the cores 5a,5b,5c have an elongated shape when viewed from above on their free head face 11 (the direction of the plan view on the head face 11 is indicated by arrow D in Fig. 2) and are aligned with their pole axis axially parallel to the rotational axis Ar of the rotor 3. The direction PA of the pole axis thus corresponds with the longitudinal extension of the rotation axis Ar of the rotor 3.

The laminates 7a,7b,7c have been punched from a grain-oriented electrical steel sheet E that was known from the prior art for this purpose. The grain-oriented electrical steel sheet E had a preferential direction GO in which its grains are oriented and which corresponds to the rolling direction in which the grain-oriented electrical steel sheet E was hot-rolled and cold-rolled during its production.

For the cutting of the first laminates 7a, the electrical sheet E has been aligned with respect to the respective punching tool in such a way that, seen in plan view on the flat side 8 of the laminate 7a, the preferred direction GO of its grains in the direction of the forward rotation of the rotor 3 deviates from the alignment of the longitudinal axis LA of the laminates 7a and consequently also from the PA of the pole axis of the poles 5a - 5c by a tilt angle â of, for example, 5° to 10°, in particular 7° to 8°.

For the cutting of the second laminates 7b, on the other hand, the electrical steel sheet E has been aligned with respect to the respective punching tool in such a way that, again seen in plan view on the flat side 8 of the laminates 7b, the preferred direction GO of its grains deviates in the direction of the reverse rotation of the rotor 3 from the alignment of the longitudinal axis LA of the laminates 7b and consequently also from the direction PA of the pole axis of the poles 5a - 5c by an angle -â of, which is for example, -5° to 10°, in particular -7° to -8° as well.

For the cutting of the third laminates 7c, the electrical steel sheet E was finally aligned with respect to the respective punching tool so that, also seen in plan view on the flat side 8 of the laminates 7c, the preferred direction GO of its grains corresponds to the direction PA of the pole axis of the poles 5a - 5c, which means there was no tilt angle here.

The laminates 7a,7b,7c punched from the grain-oriented electrical steel sheet E in this way were stacked in alternating sequence to the cores 5a to 5c, so that between a laminate 7a,7b, each of which has a deviation angle â or -à respectively, there is a laminate 7c which has no deviation angle.

The cores 5a to 5c formed in this way are attached to a carrier ring of stator 2 (not shown here) and wrapped with the respective winding 6.

Rotor 3 carries two circular rotor discs 20,21, one of which is assigned to each of the front faces of stator 2. The rotor discs 20,21 carry permanent magnets 22,23 arranged in a manner known per se on their front face assigned to the respective front face of the stator 2.

The permanent magnets 22,23 are distributed in a manner known per se at uniform angular spacings about the axis of rotation Ar on the peripheral edge region of the rotor discs 20,21 in such a way that the circular path through which they pass during operation sweeps poles 5a to 5c.

The orientation of the preferred direction GO, in which the grains of the laminates 7a,7b are aligned, causes a deviation of more than 0°, preferably more than 1° and up to 30° (tilt angle) from the orientation PA of the pole axes of the poles 3a ... 3n. By this the magnetic attraction forces ("cogging") occurring when the cores 5a to 5c of poles 3a ... 3n meet the permanent magnets 22,23 can be overcome more easily, so that an overall quiet, energy-efficient running of the axial flux motor 1 is achieved.

Figures 5a and 5b have already been dealt with in the general description above.

In Fig. 5a

- the arrow "GO" indicates the preferred orientation of the grains of the laminations "La ... Ln" which are stacked to form a core "C",
- the arrow "PA" indicates the direction of the pole axis of the respective pole,
- the arrow "U" indicates the direction of rotation of the rotor,
- "â" indicates the tilt angle enclosed between the direction PA of the pole axis and the preferred direction GO, in which the grains of the respective lamination La ... Ln are oriented.

In Fig. 5b

- "La", "Lb", "Lc" indicate laminations cut from a grain oriented electrical steel sheet,
- "C" indicates a core formed by a stack of laminations La,Lb,Lc,
- the arrow "PA" indicates the direction of the pole axis of the pole the core "C" is assigned to,
- the arrow "GOf" indicates the preferred orientation of the grains of a first lamination "La" of the core "C",
- the arrow "Uf" indicates the forward direction of rotation of the rotor,
- "â" indicates the tilt angle enclosed between the direction PA of the pole axis and the preferred direction GOf,
- the arrow "GOr" indicates the preferred orientation of the grains of a second lamination "Lb" arranged in the vicinity of the first lamination La,
- the arrow "Ur" indicates the reverse direction of rotation of the rotor,
- "-â" indicates the tilt angle enclosed between the direction PA of the pole axis and the preferred direction GOr, in which the grains of the second lamination Lb are oriented,
- "Lc" indicates an additional lamination respectively arranged between the laminations La and Lb, the direction of the orientation of the grains of the lamination Lc corresponding to the direction of the pole axis PA, so that for the respective additional lamination Lc the tilt angle is "0".

**Reference numbers:**

Fig. 1 - 4b:

| | |
|---|---|
| 1 | Axial flux electric motor |
| 2 | Stator |
| 3 | Rotor |
| 3a ... 3n | Poles of the Stator 2 |
| 4 | Shaft of the rotor 3 |
| 5a to 5c | Cores of the Poles 3a - 3n |
| 6 | Winding of the Poles 3a - 3n |
| 7a to 7c | Laminations forming the cores 5a to 5c |
| 8 | Flat sides of the laminations 7a,7b,7c |
| 9a,9b | End sections of the laminations 7a,7b,7c |
| 10 | Central portion of the laminations 7a,7b,7c |
| 11 | Head face of the cores 5a to 5c |
| 20,21 | Rotor discs 20,21 of the rotor 3 |
| 22,23 | Permanent magnets |
| â, -â | Tilt angle |
| Ar | Axis of rotation of the rotor 3 |
| D | Direction of the plan view on the head face 11 |
| E | Grain-oriented electrical steel sheet |
| LA | Longitudinal axis of the laminations 7a,7b,7c |
| LR | Longitudinal direction of the laminations 7a,7b,7c |
| PA | Direction of the pole axis of the poles 3a to 3n |
| QA | Transverse axis of the laminations 7a,7b,7c |

Fig. 5a,5b:

| | |
|---|---|
| â,-â | Tilt angle enclosed between the direction PA of the pole axis and the preferred direction GO |
| C | Core |
| GO | Preferred orientation of the grains of the laminations "La ... Ln" |
| GOf | Preferred orientation of the grains of a first lamination "La" |
| GOr | Preferred orientation of the grains of a second lamination "Lb" |
| La ... Ln | Laminations cut from a grain oriented electrical steel sheet |
| PA | direction of the pole axis of the respective pole |
| U | indicates the direction of rotation of the rotor |
| Uf | Forward direction of rotation of the rotor |
| Ur | Reverse direction of rotation of the rotor |

**Claims**

1.  An axial flux electric motor comprising a rotor (3) rotatably supported around an axis of rotation (Ar) and carrying a number RPN of magnetic poles (22,23), and a stator (2) carrying a number SPN of poles (3a ... 3n) distributed at regular angular intervals about the axis of rotation (Ar) of the rotor (3), each of the poles (3a ... 3n) of the stator (2) comprising a core (5a to 5c) extending in a radial direction of the stator (2) and a winding (6) of an electric conductor wound around the core (5a to 5c), the cores (5a to 5c) of the poles (3a ... 3n) each being formed by a stack of laminations (7a to 7c) consisting of a grain-oriented electrical steel sheet (E), the grains of which are oriented in a preferred direction (GO), the cores (5a to 5c) respectively being aligned along a pole axis of the respective pole (3a ... 3n) which is directed axially parallel to the axis of rotation (Ar) of the rotor (3), wherein in a plan view on the head face (11) of the core (5a to 5c) of at least one of the poles (3a ... 3n), at least for one of the laminations (7a - 7c) forming this core (5a to 5c) the direction (PA) of the pole axis includes with the preferred direction (GO) of the grains of said lamination (7a to 7c) a tilt angle â which is greater than 0° and at most equal to 30°, wherein the rotor (3) is movable in a forward and a reverse direction and wherein in at least one pole (3a ... 3n) in at least one of the laminations (7a - 7c) forming the core (5a to 5c) of said pole (3a ... 3n) the preferred direction (GO), in which the grains of said lamination (7a to 7c) are oriented, deviates in the forward direction (Uf) from the direction (PA) of the pole axis, while in another lamination (7a to 7c) of the same core (5a to 5c) the preferred direction (PA) in which the grains of this lamination (7a to 7c) are oriented, deviates in the reverse direction (Ur) from the direction (PA) of the pole axis, **characterized in that** between the laminations (7a-7b), which preferred directions (GO), in which the grains of the respective lamination (7a-7b) are oriented, deviate in opposite directions (Uf,Ur) from the direction (PA) of the pole axis of the respective pole (3a ... 3n), an additional lamination (7c) is arranged and **in that** the preferred direction (PA), in which the grains of the additional lamination (7c) are oriented, corresponds to the direction (PA) of the pole axis of the respective pole (3a ... 3n).

2.  The axial flux electric motor as claimed in claim 1, **characterized in that** the number SPN of the poles (3a ... 3n) of the stator (2) is greater than the number RPN of the magnetic poles (3a ... 3n) of the rotor (3) and the deviation tilt angle â satisfies the following condition:

$$180° / SPN \leq â \leq 180° / RPN.$$

3.  The axial flux electric motor as claimed in claim 1, **characterized in that** the number SPN of the poles (3a ... 3n) of the stator (2) is less than the number RPN of the magnetic poles (3a ... 3n) of the rotor (3) and the deviation tilt angle â satisfies the following condition:

$$180° / RPN \leq â \leq 180° / SPN.$$

4. The axial flux electric motor according to one of the preceding claims, **characterized in that** if seen in a plan view on the head face (11) of the core (5a to 5c) of the respective pole (3a ... 3n), in at least one of the poles (3a ... 3n) of the stator (2) the preferred direction (GO) of the grains of at least one lamination (7a to 7c) of its core (5a to 5c) includes with the direction (PA) of its pole axis a tilt angle â which is different from the tilt angle â included by the preferred direction (GO) of the grains of another lamination (7a to 7c) of the same core (5a to 5c) with the direction of the pole axis (PA) of the respective pole (7a to 7c).

5. The axial flux electric motor according to any of the preceding claims, **characterized in that** the amounts of the tilt angles â which are respectively enclosed between the preferred directions (PA), in which the grains of the laminations (7a - 7c) are respectively oriented, and the direction (PA) of pole axis are equal.

6. The axial flux electric motor according to any the preceding claims, **characterized in that** in a first pole (3a ... 3n) of the stator (2) the preferred direction (GO), the grains of the laminations (7a - 7c) of the core (5a to 5c) of this first pole (3a ... 3n) are oriented, differs in a circumferential direction from the direction (PA) of the pole axis of said pole (3a ... 3n), while in a second pole (3a ... 3n) of the stator (2) the preferred direction (GO), in which the grains of the laminations (7a - 7c) of the core (5a to 5c) of the second pole (3a ... 3n) are oriented, differs in the opposite circumferential direction from the direction (PA) of the pole axis of said other pole (3a ... 3n).

**Patentansprüche**

1. Ein Axialflusselektromotor, welcher einen Rotor (3), der um eine Drehachse (Ar) drehbar gelagert ist und eine Anzahl RPN an Magnetpolen (22, 23) trägt, und einen Stator (2), der eine Anzahl SPN an Polen (3a ... 3n) trägt, die mit regelmäßigen Winkelabständen um die Drehachse (Ar) des Rotors (3) herum verteilt sind, umfasst, wobei jeder der Pole (3a ... 3n) des Stators (2) einen Kern (5a bis 5c), der in der radialen Richtung des Stators (2) verläuft, und eine Wicklung (6) eines elektrischen Leiters, der um den Kern (5a bis 5c) herum gewickelt ist, umfasst, wobei die Kerne (5a bis 5c) der Pole (3a ... 3n) jeweils von einem Paket aus Kernblechen (7a bis 7c) gebildet sind, die aus einem kornorientierten Elektrostahlblech (E) bestehen, dessen Körner in einer Vorzugsorientierung (GO) orientiert sind, wobei die Kerne (5a bis 5c) jeweils entlang einer Polachse des entsprechenden Pols (3a ... 3n) ausgerichtet sind, die parallel zu der Drehachse (Ar) des Rotors (3) axial ausgerichtet ist, wobei in der Draufsicht auf die Oberseite (11) des Kerns (5a bis 5c) mindestens einer der Pole (3a ... 3n) bei wenigstens einem der Kernbleche (7a bis 7c), welche diesen Kern (5a bis 5c) bilden, die Richtung (PA) der Polachse mit der Vorzugsorientierung (GO) der Körner dieses Kernblechs (7a bis 7c) einen Neigungswinkel â umschließt, der größer als 0° und höchstens gleich 30° ist, wobei der Rotor (3) in einer Vorwärts- und einer Rückwärtsrichtung beweglich ist und bei mindestens einem Pol (3a ... 3n) bei wenigstens einem der Kernbleche (7a bis 7c), welche den Kern (5a bis 5c) dieses Pols (3a ... 3n) bilden, die Vorzugsorientierung (GO), in welcher die Körner dieses Kernblechs (7a bis 7c) orientiert sind, in der Vorwärtsrichtung (Uf) von der Richtung (PA) der Polachse abweicht, während bei einem anderen Kernblech (7a bis 7c) desselben Kerns (5a bis 5c) die bevorzugte Richtung (PA), in welcher die Körner dieses Kernblechs (7a bis 7c) orientiert sind, in der Rückwärtsrichtung (Ur) von der Richtung (PA) der Polachse abweicht, **dadurch gekennzeichnet, dass** zwischen den Kernblechen (7a bis 7b), deren Vorzugsorientierung (GO), in welcher die Körner des jeweiligen Kernblechs (7a bis 7b) orientiert sind, in einander entgegengesetzten Richtungen (Uf, Ur) von der Richtung (PA) der Polachse des entsprechenden Pols (3a ... 3n) abweicht, ein zusätzliches Kernblech (7c) angeordnet ist **und dass** die bevorzugte Richtung (PA), in welcher die Körner des zusätzlichen Kernblechs (7c) orientiert sind, der Richtung (PA) der Polachse des betreffenden Pols (3a ... 3n) entspricht.

2. Der Axialflusselektromotor nach Anspruch 1, **dadurch gekennzeichnet, dass** die Anzahl SPN der Pole (3a ... 3n) des Stators (2) größer als die Anzahl RPN der Magnetpole (3a ... 3n) des Rotors (3) ist und der Neigungswinkel der Abweichung folgende Bedingung erfüllt:

$$180°/SPN \leq â \leq 180°/RPN.$$

3. Der Axialflusselektromotor nach Anspruch 1, **dadurch gekennzeichnet, dass** die Anzahl SPN der Pole (3a ... 3n) des Stators (2) kleiner als die Anzahl RPN der Magnetpole (3a ... 3n) des Rotors (3) ist und der Neigungswinkel der Abweichung folgende Bedingung erfüllt:

$$180°/RPN \leq â \leq 180°/SPN.$$

**4.** Der Axialflusselektromotor nach einem der vorhergehenden Ansprüche, **dadurch gekennzeichnet, dass,** gesehen in der Draufsicht auf die Oberseite (11) des Kerns (5a bis 5c) des jeweiligen Pols (3a ... 3n), bei wenigstens einem der Pole (3a ... 3n) des Stators (2) die Vorzugsorientierung (GO) der Körner mindestens eines Kernblechs (7a ... 7c) seines Kerns (5a bis 5c) mit der Richtung (PA) seiner Polachse einen Neigungswinkel â umschließt, der sich von dem Neigungswinkel â unterscheidet, der von der Vorzugsorientierung (GO) der Körner eines anderen Kernblechs (7a bis 7c) desselben Kerns (5a bis 5c) und der Richtung (PA) der Polachse des entsprechenden Pols (7a bis 7c) umschlossen wird.

**5.** Der Axialflusselektromotor nach einem der vorhergehenden Ansprüche, **dadurch gekennzeichnet, dass** die Beträge der Neigungswinkel â, die jeweils von den bevorzugten Richtungen (PA), in welchen die Körner der Kernbleche (7a bis 7c) jeweils orientiert sind, und der Richtung (PA) der Polachse umschlossen werden, gleich sind.

**6.** Der Axialflusselektromotor nach einem der vorhergehenden Ansprüche, **dadurch gekennzeichnet, dass** bei einem ersten Pol (3a ... 3n) des Stators (2) die Vorzugsorientierung (GO), in welcher die Körner der Kernbleche (7a bis 7c) des Kerns (5a bis 5c) dieses ersten Pols (3a ... 3n) orientiert sind, sich in einer Umfangsrichtung von der Richtung (PA) der Polachse dieses Pols (3a ... 3n) unterscheidet, während bei einem zweiten Pol (3a ... 3n) des Stators (2) die Vorzugsorientierung (GO), in welcher die Körner der Kernbleche (7a bis 7c) des Kerns (5a bis 5c) des zweiten Pols (3a ... 3n) orientiert sind, sich in der entgegengesetzten Umfangsrichtung von der Richtung (PA) der Polachse dieses anderen Pols (3a ... 3n) unterscheidet.

**Revendications**

**1.** Moteur électrique à flux axial comprenant un rotor (3) supporté de manière rotative autour d'un axe de rotation (Ar) et portant un nombre RPN de pôles magnétiques (22, 23), et un stator (2) portant un nombre SPN de pôles (3a ... 3n) répartis à intervalles angulaires réguliers autour de l'axe de rotation (Ar) du rotor (3), chacun des pôles (3a ... 3n) du stator (2) comprenant un noyau (5a à 5c) s'étendant dans une direction radiale du stator (2) et un enroulement (6) d'un conducteur électrique enroulé autour du noyau (5a à 5c), les noyaux (5a à 5c) des pôles (3a ... 3n) étant chacun formés par un empilement de tôles magnétiques (7a à 7c) constituées d'une feuille d'acier électrique à grains orientés (E), dont les grains sont orientés dans une direction préférée (GO), les noyaux (5a à 5c) étant respectivement alignés le long d'un axe de pôle du pôle respectif (3a ... 3n) qui est dirigé axialement parallèlement à l'axe de rotation (Ar) du rotor (3), dans lequel dans une vue en plan sur la face de tête (11) du noyau (5a à 5c) d'au moins un des pôles (3a ... 3n), au moins pour l'une des tôles magnétiques (7a à 7c) formant ce noyau (5a à 5c), la direction (PA) de l'axe de pôle comporte avec la direction privilégiée (GO) des grains de ladite tôle magnétique (7a à 7c) un angle d'inclinaison à qui est supérieur à 0° et au plus égal à 30°, dans lequel le rotor (3) est mobile dans une direction vers l'avant et vers l'arrière et dans lequel dans au moins un pôle (3a ... 3n) dans au moins une des tôles magnétiques (7a à 7c) formant le noyau (5a à 5c) dudit pôle (3a ... 3n) la direction préférée (GO), dans laquelle les grains de ladite tôle magnétique (7a à 7c) sont orientés, dévie dans la direction vers l'avant (Uf) depuis la direction (PA) de l'axe de pôle, tandis que dans une autre tôle magnétique (7a à 7c) du même noyau (5a à 5c) la direction préférée (PA) dans laquelle les grains de cette tôle magnétique (7a à 7c) sont orientés, dévie dans la direction inverse (Ur) depuis la direction (PA) de l'axe de pôle, **caractérisé en ce que**, entre les tôles magnétiques (7a à 7b), lesquelles directions préférées (GO), dans lesquelles les grains de la tôle magnétique (7a à 7b) respective sont orientés, dévient dans des directions opposées (Uf,Ur) depuis la direction (PA) de l'axe de pôle du pôle respectif (3a ... 3n), une tôle magnétique supplémentaire (7c) est disposée et **en ce que** la direction préférée (PA), dans laquelle les grains de la tôle magnétique supplémentaire (7c) sont orientés, correspond à la direction (PA) de l'axe de pôle du pôle respectif (3a ... 3n).

**2.** Moteur électrique à flux axial selon la revendication 1, **caractérisé en ce que** le nombre SPN des pôles (3a ... 3n) du stator (2) est supérieur au nombre RPN des pôles magnétiques (3a ... 3n) du rotor (3) et l'angle d'inclinaison de déviation à satisfait à la condition suivante :

$$180° / \text{SPN} \leq \hat{a} \leq 180° / \text{RPN}.$$

**3.** Moteur électrique à flux axial selon la revendication 1, **caractérisé en ce que** le nombre SPN des pôles (3a ... 3n) du stator (2) est inférieur au nombre RPN des pôles magnétiques (3a... 3n) du rotor (3) et l'angle d'inclinaison de déviation à satisfait à la condition suivante :

$$180°/ \text{RPN} \leq \hat{a} \leq 180° / \text{SPN}.$$

**4.** Moteur électrique à flux axial selon l'une des revendications précédentes, **caractérisé en ce que** s'il est vu dans une vue en plan sur la face de tête (11) du noyau (5a à 5c) du pôle respectif (3a ... 3n), dans au moins un des pôles (3a ... 3n) du stator (2) la direction préférée (GO) des grains d'au moins une tôle magnétique (7a à 7c) de son noyau (5a à 5c) comporte avec la direction (PA) de son axe de pôle un angle d'inclinaison à qui est différent de l'angle d'inclinaison à inclus par la direction préférée (GO) des grains d'une autre tôle magnétique (7a à 7c) du même noyau (5a à 5c) avec la direction de l'axe de pôle (PA) du pôle respectif (7a à 7c).

5. Moteur électrique à flux axial selon l'une quelconque des revendications précédentes, **caractérisé en ce que** les quantités des angles d'inclinaison à qui sont respectivement enfermés entre les directions (PA) préférées, dans lesquelles les grains des tôles magnétiques (7a à 7c) sont respectivement orientés, et la direction (PA) d'axe de pôle sont égales.

6. Moteur électrique à flux axial selon l'une quelconque des revendications précédentes, **caractérisé en ce que** dans un premier pôle (3a ... 3n) du stator (2) la direction privilégiée (GO), les grains des tôles magnétiques (7a à 7c) du noyau (5a à 5c) de ce premier pôle (3a ... 3n) sont orientés, diffère dans une direction circonférentielle par rapport à la direction (PA) de l'axe de pôle dudit pôle (3a ... 3n), tandis que dans un second pôle (3a ... 3n) du stator (2) la direction privilégiée (GO), dans laquelle les grains des tôles magnétiques (7a à 7c) du noyau (5a à 5c) du second pôle (3a ... 3n) sont orientés, diffère dans la direction circonférentielle opposée par rapport à la direction (PA) de l'axe de pôle dudit autre pôle (3a ... 3n).

**Fig. 1**

EP 3 793 062 B1

Fig. 2

**Fig. 3a**

**Fig. 3b**

**Fig. 3c**

EP 3 793 062 B1

Fig. 4c

Fig. 4b

Fig. 4a

**Fig. 5a**

**Fig. 5b**

EP 3 793 062 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011066978 A
- WO 2018167214 A1